(19) Europäisches Patentamt
European Patent Office
Office européen des brevets

(11) Veröffentlichungsnummer : **0 095 099**
**B1**

(12) # EUROPÄISCHE PATENTSCHRIFT

(45) Veröffentlichungstag der Patentschrift : **20.08.86**

(21) Anmeldenummer : **83104694.1**

(22) Anmeldetag : **13.05.83**

(51) Int. Cl.⁴ : **C 07 C131/00**, C 07 C101/34, C 07 C 97/07, A 01 N 35/06, A 01 N 37/44

(54) **Cyclohexan-1,3-dion-Derivate.**

(30) Priorität : **22.05.82 DE 3219315**

(43) Veröffentlichungstag der Anmeldung : **30.11.83 Patentblatt 83/48**

(45) Bekanntmachung des Hinweises auf die Patenterteilung : **20.08.86 Patentblatt 86/34**

(84) Benannte Vertragsstaaten : **DE FR GB IT**

(56) Entgegenhaltungen :
**DE-B- 2 439 104**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Jahn, Dieter, Dr.**
**Burgunder Weg 8**
**D-6803 Edingen-Neckarhausen (DE)**
Erfinder : **Becker, Rainer, Dr.**
**Im Haseneck 22**
**D-6702 Bad Duerkheim (DE)**
Erfinder : **Keil, Michael, Dr.**
**Limesstrasse 3**
**D-6700 Ludwigshafen (DE)**
Erfinder : **Himmele, Walter, Dr.**
**Eichenweg 14**
**D-6909 Walldorf (DE)**
Erfinder : **Wuerzer, Bruno, Dr. Dipl.-Landwirt**
**Ruedigerstrasse 13**
**D-6701 Otterstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 095 099 B1

**Beschreibung**

Die Erfindung betrifft Cyclohexan-1,3-dion-Derivate, ein Verfahren zur Herstellung dieser Verbindungen sowie Herbizide, welche diese Verbindungen enthalten, und deren Verwendung.

Es ist bekannt, Cyclohexan-1,3-dion-Derivate, z. B. das Natriumsalz des 2-(1-Allyloxyaminobutyliden)-4-methoxycarbonyl-5,5-dimethylcyclohexan-1,3-dions (DE-OS 2 439 104) oder das 2-(1-Ethoxyaminobutyliden)-5-(2-ethylthiopropyl)-cyclohexan-1,3-dion (DE-OS 2 822 304) oder das 2-(1-Allyloxyaminobutyliden)-5-cyclohexyl-cyclohexan-1,3-dion (JP-OS 5 419 945) als Herbizide zu verwenden. Ihre Aktivität konzentriert sich auf Ungräser und grasartige Kulturpflanzen. Gleichzeitig zeichnen sie sich durch eine sehr gute Verträglichkeit für breitblättrige Kulturpflanzen aus, jedoch nicht gegenüber Getreide.

Der Erfindung lag die Aufgabe zugrunde, ein ähnlich wirksames Herbizid gegen Ungräser zu entwickeln, das auch in Getreidekulturen angewandt werden kann.

Die Lösung dieser Aufgabe besteht in den Cyclohexan-1,3-dion-Derivaten der Formel I von Anspruch 1. Es wurde nämlich gefunden, daß sie sowie ihre Salze gegen Gräser herbizid wirksam sind und sowohl breitblättrige Kulturpflanzen und monokotyle Kulturen, welche nicht zur Familie der Gräser (Gramineen) zählen, als überraschenderweise auch Getreide nicht oder nur wenig schädigen.

Die neuen Verbindungen können in mehreren tautomeren Formeln auftreten, die alle vom Patentanspruch umfaßt werden :

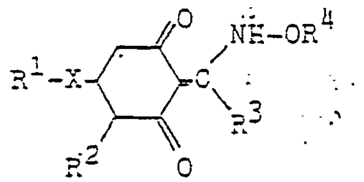
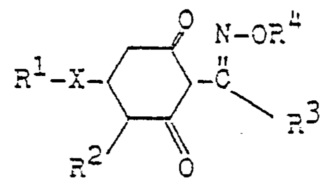
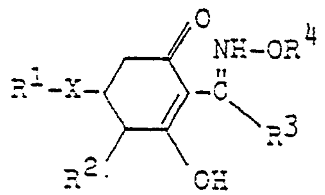
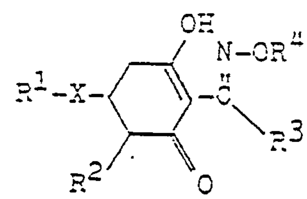

$R^1$ kann beispielsweise folgende Reste bedeuten :

Dichlorcyclopropyl
Cyclopropyl
Cyclopentyl
Cyclohexyl
2-Methylcyclohexyl
3-Methylcyclohexyl
4-Methylcyclohexyl
3-Cyclohexenyl
1-Methyl-3-cyclohexenyl
2-Methoxycyclohexyl
3-(n-Butoxy)-cyclohexyl
4-Isopropenyl-cyclohexyl
2,2,6-Trimethylcyclohexyl
2,2,6-Trimethyl-1-cyclohexenyl
Cycloheptyl
Bicyclo [2,2,1] hept-2-yl
2-Methylbicyclo [2,2,1] hept-3-yl
2,2-Dimethylbicyclo [2,2,1] hept-3-yl
Cyclooctyl
Cyclododecyl
Cyclododecadienyl

X kann beispielsweise folgende zweiwertigen Reste bedeuten :

$-S-CH_2-$

$CH_3$
$-S-CH-CH_2-$

$-S-CH_2-CH_2-$

$-O-CH_2-CH_2-S-CH_2-CH_2-$

$-S-CH_2-CH_2-S-CH_2-CH_2-$

$-O-CH_2-CH_2-O-CH_2-CH_2-$

$\quad CH_3$
$-O-CH-$

$\quad CH_3$
$-O-CH-CH_2-$

$\qquad\quad CH_3$
$-O-CH_2-CH-$

$-O-(CH_2)_{2\ oder\ 3}$

$-CH_2-CH_2-O-CH-$
$\qquad\qquad\quad CH_3$

$-CH_2-CH_2-O-CH_2-CH_2-$

$\qquad\quad CH_3$
$-CH_2-O-CH-CH_2-$

$\qquad\quad CH_3$
$-CH_2-O-CH-CH_2-CH_2-$

$\ CH_3 \qquad\quad CH_3$
$-CH-CH_2-O-CH-$

$R^2$ kann bedeuten :
Wasserstoff
Methoxycarbonyl
Ethoxycarbonyl

$R^3$ kann folgende Reste bedeuten :
Methyl
Ethyl
n-Propyl
i-Propyl
n-Butyl
sec.-Butyl
i-Butyl
tert.-Butyl

$R^4$ kann beispielsweise folgende Reste bedeuten :
Methyl
Ethyl
n-Propyl
i-Propyl
Allyl
Propargyl
3-Chlor-2-propenyl
2-Chlor-2-propenyl
2,3-Dichlor-2-propenyl
2,3,3-Trichlor-2-propenyl.

Die Salze der Verbindungen sind die Metall- und Ammoniumsalze, vorzugsweise die Alkalisalze, insbesondere die Kalium- oder Natriumsalze.

Herstellung

Die erfindungsgemäßen Verbindungen können nach folgenden Methoden hergestellt werden :

Als Ausgangsverbindungen können Aldehyde der allgemeinen Formel $R^1$—X—CHO dienen, die nach folgendem Schema durch Aldol-Kondensation (siehe Organic Reactions, John Wiley & Sons, New York, 1968, Band 16) sowie gegebenenfalls anschließende selektive Hydrierung an der Doppelbindung (siehe

Houben-Weyl, Methoden der organ. Chemie, Band IV/1c, Georg Thieme Verlag, Stuttgart - New York 1980) dargestellt werden können.

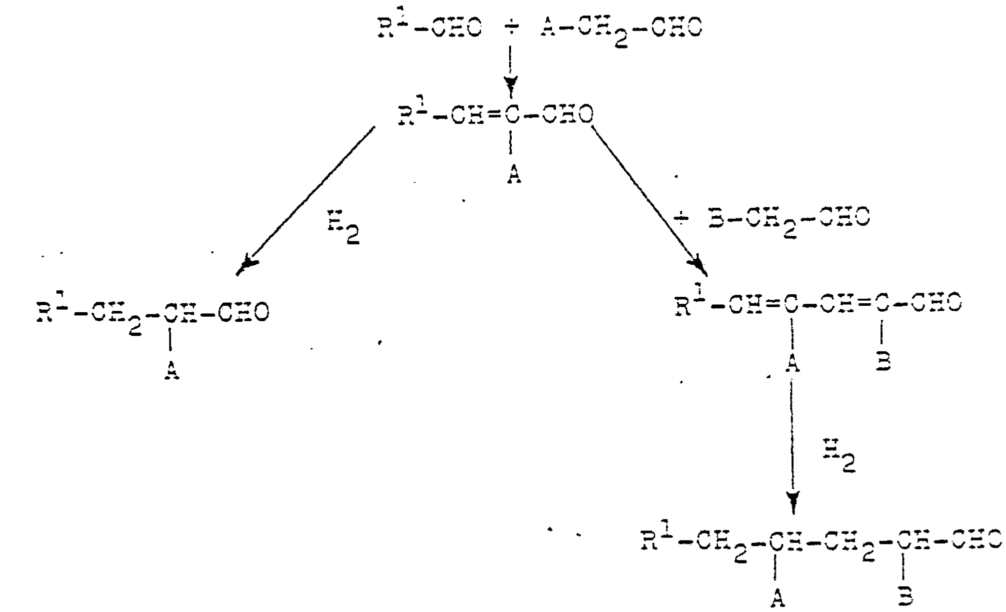

A und B stehen für gleichartige oder verschiedene Alkylketten mit 1 bis 3 Kohlenstoffatomen. Sowohl die gesättigten als auch die ungesättigten Aldehyde können zur Synthese der erfindungsgemäßen Verbindungen dienen.

Durch Hydroformylierung von entsprechenden Enolethern kann man zu Aldehyden mit Etherstruktur gelangen.

Aldehyde mit Thioether-Struktur erhält man beispielsweise durch Addition von Mercaptanen an alpha, beta-ungesättigte Aldehyde.

Die nach vorstehenden Methoden dargestellten Aldehyde können in einer Aldol-Kondensation mit Aceton zu den Vinylketonen III umgesetzt werden, wobei oftmals auch Isomere der allgemeinen Formel IIIa entstehen.

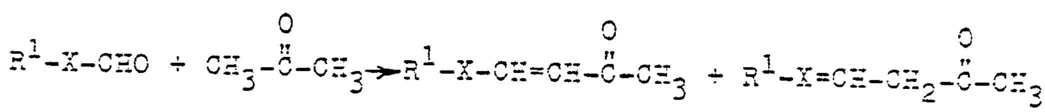

(III) (IIIa)

Die Vinylketone III können mit Malonestern, wie dies beispielsweise in Organic Synthesis Coll. Vol. II, S. 200 beschrieben ist, zu Cyclohexan-1,3-dionen der allgemeinen Formel IV, die auch in den tautomeren Formen IVa und IVb auftreten können, umgesetzt werden.

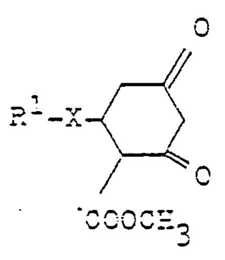

(IV)

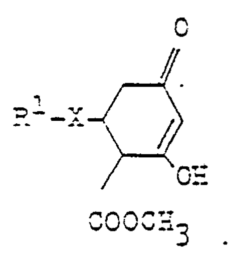

(IVa)

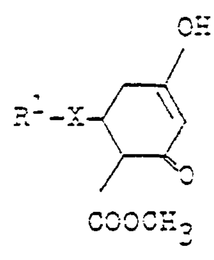

(IVb)

Zur Cyclisierung sind auch die Isomeren IIIa geeignet, da diese unter den Reaktionsbedingungen isomerisieren. Eine weitere Darstellungsmöglichkeit der Verbindungen IV aus den Aldehyden R—X—CHO besteht in der Umsetzung mit Malonsäure nach Knoevenagel-Doebner (s. Org. Reactions Band 15, S. 204). Veresterung der entstandenen Säure, sowie Cyclisierung mit Acetessigestern in analoger Weise, wie dies z. B. in Houben-Weyl, Methoden der organischen Chemie, Band 8, S. 598 beschrieben ist.

Daraus können durch Kochen mit Alkalilauge und anschließendes Erhitzen in saurem Medium die Cyclohexan-1,3-dione der allgemeinen Formel V, die auch in der tautomeren Form Va auftreten können, dargestellt werden.

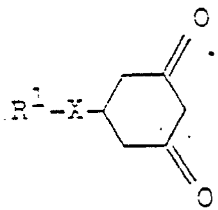 (V)

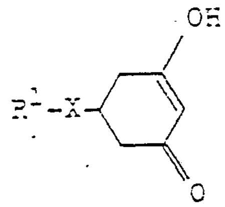 (Va)

Verbindungen der Formel IV and V können zu den Verbindungen der Formel II umgesetzt werden, wie dies z. B. in Tetrahedron Letters 29, Seite 2 491 beschrieben ist.

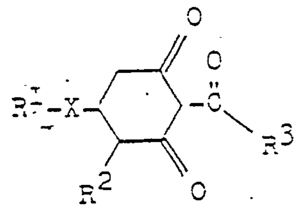 (II).

Es ist auch möglich, Verbindungen der Formel II über die Zwischenstufe der Enolester, die bei der Umsetzung von Verbindungen der Formel V eventuell als Isomerengemische anfallen und in Gegenwart von Imidazol- oder Pyridinderivaten umgelagert werden (s. Japanisches Patent 54 063 052), darzustellen.

Verbindungen der Formel II können durch Reaktion mit Hydroxylaminderivaten $R^4$—$OHN_3Y$, wobei $R^4$ und Y die vorstehend genannten Bedeutungen besitzen, zu den erfindungsgemäßen neuen Verbindungen umgesetzt werden. Man führt die Reaktion zweckmäßig in heterogener Phase in einem inerten Lösungsmittel bei Temperaturen zwischen 0 und 80 °C oder dem Siedepunkt des Gemisches, vorzugsweise bei 15 bis 70 °C, in Gegenwart einer Base durch. Basen sind beispielsweise Carbonate, Hydrogencarbonate, Acetate, Alkoholate, Hydroxide oder Oxide von Alkali- oder Erdalkalimetallen, besonders von Natrium und Kalium sowie Magnesium und Kalcium. Daneben können auch organische Basen wie Pyridin oder tertiäre Amine Verwendung finden. Ein für die Umsetzung besonders geeigneter pH-Bereich reicht von pH 2 bis pH 8, insbesondere von pH 4,5 bis pH 5,5. Die Einstellung des pH-Bereichs für die Umsetzung erfolgt vorzugsweise durch Zusatz von Acetaten, beispielsweise Alkaliacetaten, insbesondere Natrium- oder Kaliumacetat oder ihren Mischungen. Die Alkaliacetate werden beispielsweise angewendet in Mengen von 0,5 bis 2 mol, bezogen auf die Ammoniumverbindung. Als Lösungsmittel sind geeignet beispielsweise Methanol, Ethanol, Isopropanol, Benzol, Tetrahydrofuran, Chloroform, Acetonitril, Dichlorethan, Essigsäureethylester, Dioxan, Dimethylsulfoxid. Die Reaktion ist nach einigen Stunden beendet, das Reaktionsprodukt kann durch Einengen der Mischung, Zugabe von Wasser und Extraktion mit einem unpolaren Lösungsmittel sowie Abdestillieren des Lösungsmittels unter vermindertem Druck isoliert werden.

Darüber hinaus können die erfindungsgemäßen Verbindungen durch Umsetzen der Verbindungen der allgemeinen Formel II mit freien Hydroxylaminen der Formel $R^4$—O—$NH_2$, wobei $R^4$ die in Anspruch 1 genannten Bedeutungen besitzt, in inerten Lösungsmitteln bei Temperaturen von 0 °C bis zum Siedepunkt des Gemisches, bevorzugt von 15 bis 70 °C, erhalten werden. Gegebenenfalls wird das Alkylhydroxylamin als wäßrige Lösung eingesetzt. Geeignete Lösungsmittel sind beispielsweise Methanol, Ethanol, Isopropanol, Cyclohexanol, Methylenchlorid, Chloroform, Toluol, Tetrahydrofuran, Acetonitril, Dichlorethan, Essigsäureethylester.

Die Natrium- und Kaliumsalze der neuen Verbindungen können durch Behandeln dieser Verbindungen mit Natrium- oder Kaliumhydroxid in wäßriger Lösung oder in einem organischen Lösungsmittel wie Methanol, Ethanol, Aceton erhalten werden.

Auch Natrium- und Kaliumalkoholate können als Basen dienen.

Andere Metallsalze, z. B. die Mangan-, Kupfer-, Zink-, Eisen- und Bariumsalze können aus dem Natriumsalz durch Reaktion mit den entsprechenden Metallchloriden in wäßriger Lösung hergestellt werden.

Die folgenden Beispiele erläutern die Herstellung der neuen Cyclohexan-1,3-dione.

In den Beispielen verhalten sich Gewichtsteile zu Volumenteilen wie Kilogramm zu Liter. Ohne gegenteilige Angaben beziehen sich Teile auf das Gewicht.

(Siehe Tabellen Seite 6 ff.)

## Herstell-Beispiele

| Nr. | $R^1$ | X | $R^2$ | $R^3$ | $R^4$ | $n_D$ (bei °C) |
|---|---|---|---|---|---|---|
| 1 | Cyclohexyl | $(R^1)-O-CH_2-CH_2-$ | H | $n-C_3H_7$ | Ethyl | 1,5119 (21) |
| 2 | " | " | $COOCH_3$ | " | " | 1,5072 (21) |
| 3 | " | " | H | " | $-CH_2-CH=CH_2$ | 1,5180 (23) |
| 4 | " | $-CH(CH_3)-CH_2-O-CH(CH_3)-$ | H | " | " | 1,5112 (24) |
| 5 | " | " | H | " | $C_2H_5$ | 1,5069 (24) |
| 6 | " | $-O-CH_2-CH(CH_3)-$ | H | " | " | |
| 7 | " | " | H | " | $-CH_2-CH=CH_2$ | |
| 8 | Cyclododecyl | " | H | " | $C_2H_5$ | |
| 9 | " | " | H | " | $-CH_2-CH=CH_2$ | |
| 10 | " | $-O-CH_2-CH_2-CH_2-$ | H | " | " | |
| 11 | " | " | H | " | $C_2H_5$ | |
| 12 | Cyclohexyl | " | H | " | " | |
| 13 | " | " | H | " | $-CH_2-CH=CH_2$ | |
| 14 | 2 Methylcyclohexyl | $-O-CH_2-CH_2-$ | H | " | " | |
| 15 | " | " | H | " | $C_2H_5$ | |
| 16 | 3-Methylcyclohexyl | $-O-CH_2-CH_2-$ | H | $n-C_3H_7$ | $C_2H_5$ | |
| 17 | " | " | H | " | $-CH_2-CH=CH_2$ | |
| 18 | 4-Methylcyclohexyl | " | H | " | " | |
| 19 | " | " | H | " | $C_2H_5$ | 1,5038 (23) |
| 20 | 2-Methoxicyclohexyl | " | H | " | " | |
| 21 | " | " | H | " | $-CH_2-CH=CH_2$ | |
| 22 | 3-n-Butoxicyclohexyl | " | H | " | " | |
| 23 | " | " | H | " | $C_2H_5$ | |
| 24 | 4-Isopropenylcyclohexyl | " | H | " | " | |

| Nr. | $R^1$ | X | $R^2$ | $R^3$ | $R^4$ | $n_D$ (bei °C) |
|---|---|---|---|---|---|---|
| 25 | 4-Isopropylcyclohexyl | $-O-CH_2-CH_2-$ | H | $n-C_3H_7$ | $-CH_2-CH=CH_2$ | |
| 26 | Cyclopentyl | " | H | " | " | 1,5110 (22 |
| 27 | " | " | H | " | $C_2H_5$ | 1,5052 (24) |
| 28 | Cycloheptyl | " | H | " | " | |
| 29 | " | " | H | " | $-CH_2-CH=CH_2$ | |
| 30 | Cyclooctyl | " | H | " | " | |
| 31 | Cyclooctyl | $-O-CH_2-CH_2$ | H | $n-C_3H_7$ | $C_2H_5$ | |
| 32 | 2-Methylcyclohexyl | $-O-CH(CH_3)-$ | H | " | " | |
| 33 | " | " | H | " | $-CH_2-CH=CH_2$ | |
| 34 | 3-Methylcyclohexyl | " | H | " | " | |
| 35 | " | " | H | " | $C_2H_5$ | |
| 36 | 4-Methylcyclohexyl | " | H | " | " | 1,5119 (22) |
| 37 | " | " | H | " | $-CH_2-CH=CH_2$ | 1,5171 (22) |
| 38 | 2-Methoxicyclohexyl | " | H | " | " | |
| 39 | " | " | H | " | $C_2H_5$ | |
| 40 | 3-n-Butoxicyclohexyl | " | H | " | " | |
| 41 | " | " | H | " | $-CH_2-CH=CH_2$ | |
| 42 | 4-Isopropenylcyclohexyl | " | H | " | " | |
| 43 | " | " | H | " | $C_2H_5$ | |
| 44 | Cyclopentyl | " | H | " | " | 1,5088 (23) |
| 45 | " | " | H | " | $-CH_2-CH=CH_2$ | 1,5140 (24) |

| Nr. | $R^1$ | X | $R^2$ | $R^3$ | $R^4$ | $n_D$ (bei °C) |
|---|---|---|---|---|---|---|
| 46 | Cycloheptyl | $-O-CH(CH_3)-$ | H | $n-C_3H_7$ | $-CH_2-CH=CH_2$ | 1,5154 (24) |
| 47 | " | " | H | " | $C_2H_5$ | 1,5099 (24) |
| 48 | Cyclooctyl | " | H | " | " | 1,5132 (22) |
| 49 | " | " | H | " | $-CH_2-CH=CH_2$ | 1,5183 (22) |
| 50 | 2,2-Dichlorcyclopropyl | $-CH_2-O-CH(CH_3)-CH_2-$ | H | " | " | |
| 51 | " | " | H | " | $C_2H_5$ | |
| 52 | 2,4,4-Trimethyl-1-cyclohexenyl | " | H | " | " | |
| 53 | " | " | H | " | $-CH_2-CH=CH_2$ | |
| 54 | Cyclohexyl | " | H | " | " | |
| 55 | " | " | H | " | $C_2H_5$ | |
| 56 | " | $-CH_2-O-CH(CH_3)-$ | H | " | " | |
| 57 | " | " | H | " | $-CH_2-CH=CH_2$ | |
| 58 | " | $-O-CH_2-CH_2-O-CH_2-CH_2-$ | H | " | $C_2H_5$ | |
| 59 | " | " | H | " | $-CH_2-CH=CH_2$ | |
| 60 | " | $-S-CH_2-CH_2-S-CH_2-CH_2-$ | H | " | " | |
| 61 | Cyclohexyl | $-S-CH_2-CH_2-S-CH_2-CH_2-$ | H | $n-C_3H_7$ | $C_2H_5$ | |
| 62 | " | $-S-CH_2-CH_2-O-CH_2-CH_2-$ | H | " | " | |
| 63 | " | " | H | " | $-CH_2-CH=CH_2$ | |
| 64 | " | $-S-CH(CH_3)-CH_2-$ | H | " | $C_2H_5$ | 1,5295 (22) |
| 65 | " | " | H | " | $-CH_2-CH=CH_2$ | |
| 66 | " | $-S-CH_2-CH_2-$ | H | " | " | |
| 67 | " | " | H | " | $C_2H_5$ | |
| 68 | 2-Methoxicyclohexyl | $O-CH(CH_3)-$ | $COOCH_3$ | " | $-CH_2-CH=CH_2$ | 1,5132 (23) |

Anwendung

Die Anwendung der Wirkstoffe erfolgt z. B. in Form von direkt versprühbaren Lösungen, Pulvern, Suspensionen — auch hochprozentige wäßrige, ölige oder sonstige Suspensionen — oder Dispersionen, Emulsionen, Öldispersionen, Pasten, Stäubemitteln, Streumitteln, Granulaten durch Versprühen, Vernebeln, Verstäuben, Verstreuen oder Gießen. Die Anwendungsformen richten sich ganz nach den Verwendungszwecken.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlnwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron usw., stark polare Lösungsmittel, wie z. B. Dimethylformamid, Dimethylsulfoxid, N-Methylpyrrolidon, Wasser usw. in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz- Haft-, Dispergier- oder Emulgiermittel und eventuell Lösungsmittel oder Öl bestehende Konzentrate hergestellt werden, die zur Verdünnung mit Wasser geeignet sind.

An oberflächenaktiven Stoffen sind zu nennen: Alkali-, Erdalkali-, Ammoniumsalze von Ligninsulfonsäure, Naphthalinsulfonsäuren, Phenolsulfonsäuren, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylen-octylphenolether, ethoxyliertes Isooctylphenol, Octylphenol-, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolylglykoletheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Formulierungen enthalten zwischen 0,1 und 95 Gewichtsprozent Wirkstoff, vorzugsweise zwischen 0,5 und 90 Gewichtsprozent.

Die Wirkstoffe werden angewendet, beispielsweise durch Gießen, Streuen, Stäuben, Spritzen oder Sprühen auf die Pflanzen oder den Boden, durch Injizieren oder bestreichen von Planzen oder durch Einbringen in das Bewässerungswasser.

Die Applikation der Mittel kann im Vorauflaufverfahren und bei Nachauflaufanwendung erfolgen. Vorzugsweise werden die neuen Wirkstoffe nach dem Auflaufen der unerwünschten Pflanzen ausgebracht. Sind die Wirkstoffe für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (postdirected, lay-by).

Die Aufwandmengen an Wirkstoff betragen je nach Bekämpfungsziel, Jahreszeit, Zielpflanzen und Wachstumsstadien derselben 0,1 bis 5 kg Wirkstoff/ha.

Der Einfluß von Vertretern der neuen Cyclohexan-1,3-dion-Derivate auf das Waschstum von erwünschten und unerwünschten Pflanzen wird anhand von Gewächshausversuchen aufgezeigt:

Als Kulturgefäße dienten Plastikblumentöpfe mit 300 $cm^3$ lehmigem Sand und etwa 1.5 % Humus als Substrat. Die Samen der Testpflanzen wurden nach Arten getrennt flach eingesät. Unmittelbar danach erfolgte bei Vorauflaufbehandlung das Aufbringen der Wirkstoffe auf die Erdoberfläche. Sie wurden hierzu in Wasser als Verteilungsmittel suspendiert oder emulgiert und mittels fein verteilender Düsen gespritzt. Die Aufwandmengen betrugen 3,0 kg Wirkstoff/ha. Nach dem Aufbringen der Mittel beregnete man die Gefäße leicht, um Keimung und Wachstum in Gang zu bringen. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern diese nicht durch die Wirkstoffe beeinträchtigt wurden.

Für die Nachauflaufbehandlung zog man die Testpflanzen je nach Wuchsform erst bis zu einer Wuchshöhe von 3 bis 15 cm an und behandelte sie danach. Die für die Nachauflaufanwendung eingesetzte Soja zog man in einem mit Torfmull (peat) angereicherten Substrat an, um ein günstigeres Wachstum zu gewährleisten. Zur Nachaufbehandlung wurden entweder direkt gesäte und in den gleichen Gefäßen aufgewachsene Pflanzen ausgewählt, oder aber sie wurden erst als Keimpflanzen getrennt angezogen und einige Tage vor der Behandlung in die Versuchsgefäße verpflanzt. Die Aufwandmengen für die Nachauflaufbehandlung variierten je nach Wirkstoff. Sie betrugen für die erfindungsgemäßen Verbindungen 1,0 kg sowie auch 3,0 kg Wirkstoff/ha. Eine Abdeckung unterblieb bei der Nachauflaufbehandlung.

Als Vergleichsmittel wurden eingesetzt :

A 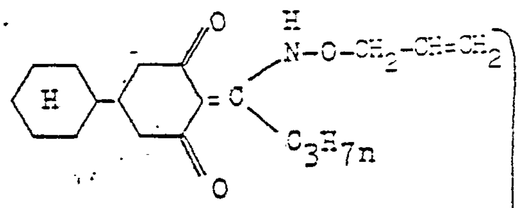

B 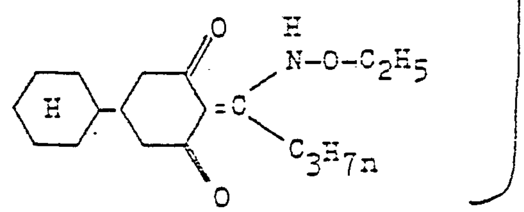

(JP-OS 54 019 945)

Die Aufwandmengen betrugen hierbei 0,25 kg/ha. Bei dieser Dosis traten bei den Vergleichsmitteln A und B bereits nicht mehr akzeptable Schädigungen an Weizen auf.

In die Versuche waren folgende Testpflanzen einbezogen :

| Botanischer Name | Deutscher Name | Englischer Name |
|---|---|---|
| Alopecurus myosuroides | Acker-Fuchsschwanzgras | blackgrass |
| Avena fatua | Flughafer | wild oats |
| Echinochloa crus-galli | Hühnerhirse | barnyardgrass |
| Glycine max. | Soja | soybeans |
| Lolium multiflorum | Ital. Raygras | ital. ryegrass |
| Setaria italica | – | foxtail |
| Triticum aestivum | Weizen | wheat |

Die Versuchsgefäße wurden im Gewächshaus aufgestellt, wobei für wärmeliebende Arten wärmere Bereiche (20 bis 35 °C) und für solche gemäßigter Klimate 10 bis 20 °C bevorzugt wurden. Die Vergleichsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Aufgang und 100 kein Aufgang bzw. völlige Zerstörung zumindest der oberirdischen Sproßteile.

In Anbetracht der guten Verträglichkeit für zahlreiche breitblättrige und andere Kulturen und der Vielseitigkeit der Applikationsmethoden können die erfindungsgemäßen Herbizide oder diese enthaltende Mittel in einer großen Zahl von Kulturpflanzen zur Beseitigung unerwünschten Pflanzenwuchses eingesetzt werden.

In Betracht kommen beispielsweise folgende Kulturen :

(Siehe Tabellen Seite 11 ff.)

| Botanischer Name | Deutscher Name | Englischer Name |
| --- | --- | --- |
| Allium cepa | Küchenzwiebel | onions |
| Ananas comosus | Ananas | pineapple |
| Arachis hypogaea | Erdnuß | peanuts (groundnuts) |
| Asparagus officinalis | Spargel | asparagus |
| Beta vulgaris spp. altissima | Zuckerrübe | sugarbeets |
| Beta vulgaris spp. rapa | Futterrübe | fooder beets |
| Beta vulgaris spp. esculenta | Rote Rübe | table beets, red beets |
| Brassica napus var. napus | Raps | rape seed |
| Brassica napus var. napobrassica | Kohlrübe | |
| Brassica napus var. rapa | Weiße Rübe | turnips |
| Brassica rapa var. silvestris | Rübsen | |
| Camellia sinensis | Teestrauch | tea plants |
| Carthamus tinctorius | Saflor - Färberdistel | safflower |
| Carya illinoinensis | Pekannußbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |

| Botanischer Name | Deutscher Name | Englischer Name |
| --- | --- | --- |
| Cucumis sativus | Gurke | cucumber |
| Cynodon dactylon | Bermudagras | Bermudagrass in turfs and lawn |
| Daucus carota | Möhre | carrots |
| Elaeis guineensis | Ölpalme | oil palms |
| Fragaria vesca | Erdbeere | strawberries |
| Glycine max | Sojabohne | soybeans |
| Gossypium hirsutum (Gossypium arboreum Gossypium herbaceum Gossypium vitifolium) | Baumwolle | cotton |
| Helianthus annuus | Sonnenblume | sunflowers |
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea batatas | Süßkartoffeln | sweet potato |
| Juglans regia | Walnußbaum | walnut trees |
| Lactua sativa | Kopfsalat | lettuce |
| Lens culinaris | Linse | lentils |
| Linum usitatissimum | Faserlein | flax |
| Lycopersicon lycopersicum | Tomate | tomato |
| Malus spp. | Apfel | apple trees |

| Botanischer Name | Deutscher Name | Englischer Name |
|---|---|---|
| Manihot esculenta | Maniok | cassava |
| Medicago sativa | Luzerne | alfalfa (lucerne) |
| Metha piperita | Pfefferminze | peppermint |
| Musa spp. | Obst- und Mehlbanane | banana plants |
| Nicotiana tabacum (N. rustica) | Tabak | tabacco |
| Olea europaea | Ölbaum | olive trees |
| Oryza sativa | Reis | rice |
| Phaseolus lunatus | Mondbohne | limabeans |
| Phaseolus mungo | Erdbohne | mungbeans |
| Phaseolus vulgaris | Buschbohnen | snapbeans, green beans, dry beans |
| Pennisetum glaucum | Perl- oder Rohrkolben-hirse | |
| Petroselinum crispum spp. tuberosum | Wurzelpetersilie | parsley |
| Picea abies | Rotfichte | Norway spruce |
| Abies alba | Weißtanne | fire |
| Pinus spp. | Kiefer | pine trees |
| Pisum sativum | Gartenerbse | English peas |
| Prunus avium | Süßkirsche | cherry trees |
| Prunus domestica | Pflaume | plum trees |

| Botanischer Name | Deutscher Name | Englischer Name |
|---|---|---|
| Prunus dulcis | Mandelbaum | almond trees |
| Prunus persica | Pfirsich | peach trees |
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sesamum indicum | Sesam | Sesame |
| Solanum tuberosum | Kartoffel | Irish potatoes |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium corymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |

Zur Verbreiterung des Wirkungsspektrums und zur Erzielung auch synergistischer Effekte können die neuen Cyclohexan-1,3-dion-Derivate mit zahlreichen Vertretern anderer herbizider oder wachstumsregulierender Wirkstoffgruppen gemischt und gemeinsam ausgebracht werden. Beispielsweise kommen als Mischungspartner Diazine, 4 H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate und andere in Betracht.

Außerdem ist es nützlich, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden. Es können auch nichtphytotoxische Öle und Ölkonzentrate zugesetzt werden.

**Patentansprüche**

1. Cyclohexan-1,3-dion-Derivate der Formel I

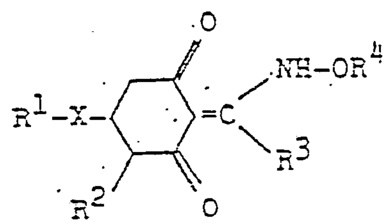

(I)

in der

$R^1$ einen Cycloalkylrest mit 3 bis 12 Kohlenstoffatomen, der gegebenenfalls einfach olefinisch ungesättigt ist und mit bis zu 3 Methyl- oder Ethylgruppen, einer Vinyl-, Methylvinyl- oder Allylgruppe, 1 oder 2 Chloratomen sowie einer Alkoxigruppe mit 1 bis 4 Kohlenstoffatomen substituiert und mit einer Alkylenkette mit bis zu 4 Kohlenstoffatomen überbrückt sein kann,

X ein Alkylenrest mit 1 bis 5 Kohlenstoffatomen, der ein oder 2 Schwefel- oder Sauerstoffatome enthält und mit maximal 3 Alkylgruppen mit 1 bis 3 Kohlenstoffatomen substituiert sein kann,

$R^2$ Wasserstoff oder Alkoxicarbonyl mit 1 bis 2 Kohlenstoffatomen im Alkoxirest,

$R^3$ Alkyl mit 1 bis 4 Kohlenstoffatomen,

$R^4$ Alkyl mit 1 bis 3 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen

bedeutet, und die Salze der Verbindungen.

2. Verfahren zur Herstellung eines Cyclohexan-1,3-dion-Derivates der Formel I gemäß Anspruch 1, dadurch gekennzeichnet, daß man eine Verbindung der Formel

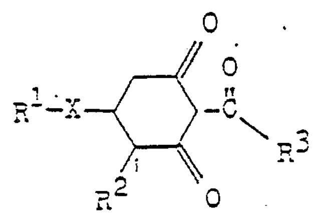

(II)

in der X, $R^1$, $R^2$ und $R^3$ die im Anspruch 1 genannten Bedeutungen haben,

a) mit einer Hydroxylammoniumverbindung der Formel $R^4O{-}NH_3Y$, in der $R^4$ die im Anspruch 1 genannten Bedeutungen hat und Y ein Anion bedeutet, in einem inerten Verdünnungsmittel gegebenenfalls in Gegenwart von Wasser bei einer Temperatur zwischen 0 und 80 °C in Gegenwart einer Base oder

b) mit einem gegebenenfalls in wäßriger Lösung vorliegenden Hydroxylamin der Formel $R^4O{-}NH_2$, in der $R^4$ die im Anspruch 1 genannten Bedeutungen hat, in einem inerten Lösungsmittel umsetzt.

3. Verfahren nach Anspruch 2, dadurch gekennzeichnet, daß man eine Verbindung der Formel II mit einer Hydroxylammoniumverbindung der Formel $R^4O{-}NH_3Y$ bei einem pH-Wert im Bereich zwischen 2 und 8 umsetzt.

4. Herbizid, enthaltend ein Cyclohexan-1,3-dion-Derivat der Formel I gemäß Anspruch 1.

5. Herbizid, enthaltend übliche Zusatzstoffe und ein Cyclohexan-1,3-dion-Derivat der Formel I gemäß Anspruch 1 als Wirkstoff.

6. Verfahren zur Bekämpfung unerwünschten Pflanzenwachstums, dadurch gekennzeichnet, daß

man die unerwünschten Pflanzen oder von unerwünschtem Pflanzenwachstum freizuhaltende Fläche mit einer herbizid wirksamen Menge eines Cyclohexan-1,3-dionderivates der Formel I gemäß Anspruch 1 behandelt.

## Claims

1. A cyclohexane-1,3-dione derivative of the formula I

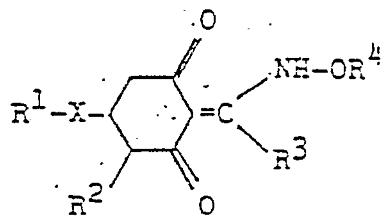

(I)

where

$R^1$ is cycloalkyl of 3 to 12 carbon atoms, which may or may not be monoolefinically unsaturated, can be substituted by up to 3 methyl or ethyl groups, one vinyl, methylvinyl or allyl group, 1 or 2 chlorine atoms or one alkoxy group of 1 to 4 carbon atoms and can be bridged by an alkylene chain of up to 4 carbon atoms,

X is alkylene of 1 to 5 carbon atoms, which contains 1 or 2 sulfur or oxygen atoms and can be substituted by not more than 3 alkyl groups of 1 to 3 carbon atoms,

$R^2$ is hydrogen or alkoxycarbonyl, where alkoxy is of 1 or 2 carbon atoms,

$R^3$ is alkyl of 1 to 4 carbon atoms,

$R^4$ is alkyl of 1 to 3 carbon atoms, alkenyl of 3 or 4 carbon atoms, propargyl or haloalkenyl of 3 or 4 carbon atoms and 1 to 3 halogen atoms,

or a salt thereof.

2. A process for the preparation of a cyclohexane-1,3-dione derivative of the formula I as claimed in claim 1, wherein a compound of the formula

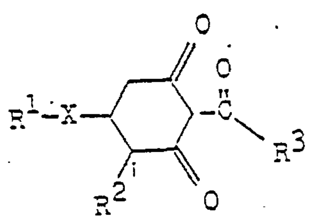

(II)

where X, $R^1$, $R^2$ and $R^3$ have the meanings given in claim 1, is reacted with

a) a hydroxylammonium compound of the formula $R^4O—NH_3Y$, where $R^4$ has the meanings given in claim 1 and Y is an anion, in an inert diluent and in the presence or absence of water, at from 0° to 80 °C and in the presence of a base, or

b) a hydroxylamine, if desired in aqueous solution, of the formula $R^4O—NH_2$, where $R^4$ has the meanings given in claim 1, in an inert solvent.

3. A process as claimed in claim 2, wherein a compound of the formula II is reacted with a hydroxylammonium compound of the formula $R^4O—NH_3Y$ at a pH of from 2 to 8.

4. A herbicide containing a cyclohexane-1,3-dione derivative of the formula I as claimed in claim 1.

5. A herbicide containing conventional additives and, as active ingredient, a cyclohexane-1,3-dione derivative of the formula I as claimed in claim 1.

6. A process for combating the growth of unwanted plants, wherein the unwanted plants or the area to be kept free from unwanted plant growth are treated with a herbicidally effective amount of a cyclohexane-1,3-dione derivative of the formula I as claimed in claim 1.

## Revendications

1. Dérivés de cyclohexane-1,3-dione de formule I

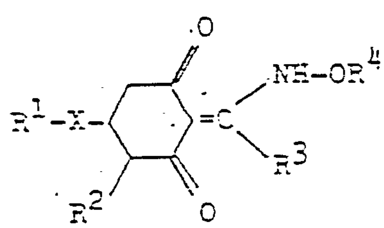

(I)

dans laquelle

$R^1$ représente un reste cycloalkyle ayant 3 à 12 atomes de carbone, qui est éventuellement insaturé oléfiniquement une fois et qui peut être substitué par jusqu'à 3 groupes méthyle ou éthyle, un groupe vinyle, méthylvinyle ou allyle, 1 ou 2 atomes de chlore ainsi qu'un groupe alcoxy ayant 1 à 4 atomes de carbone, et qui peut être ponté par une chaîne alkylène ayant jusqu'à 4 atomes de carbone,

X représente un reste alkylène ayant 1 à 5 atomes de carbone, qui contient un ou deux atomes de soufre ou d'oxygène et peut être substitué par au maximum 3 groupes alkyle ayant 1 à 3 atomes de carbone,

$R^2$ représente hydrogène ou alcoxycarbonyle ayant 1 à 2 atomes de carbone,

$R^3$ alkyle ayant 1 à 4 atomes de carbone,

$R^4$ alkyle ayant 1 à 3 atomes de carbone, alcényle ayant 3 à 4 atomes de carbone, propargyle ou halogénalcényle ayant 3 à 4 atomes de carbone et 1 à 3 atomes d'halogène

et les sels des composés.

2. Procédé de préparation d'un dérivé de cyclohexane-1,3-dione de formule I selon la revendication 1, caractérisé par le fait que l'on fait réagir, dans un solvant inerte, un composé de formule

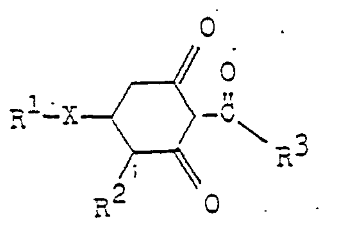

(II)

dans laquelle X, $R^1$, $R^2$ et $R^3$ ont les significations données dans la revendication 1,

a) avec un composé hydroxylammonium de formule $R^4O—NH_3Y$, dans laquelle $R^4$ a la signification donnée dans la revendication 1 et Y représente un anion, dans un diluant inerte, éventuellement en présence d'eau, à une température comprise entre 0 et 80 °C, en présence d'une base, ou

b) avec une hydroxylamine de formule $R^4O—NH_2$ se trouvant éventuellement en solution aqueuse, et où $R^4$ a la signification donnée dans la revendication 1, dans un solvant inerte.

3. Procédé selon la revendication 2, caractérisé par le fait que l'on fait réagir un composé de formule II avec un composé hydroxylammonium de formule $R^4O—NH_3Y$, à un pH compris entre 2 et 8.

4. Herbicide contenant un dérivé de cyclohexane-1,3-dione de formule I selon la revendication 1.

5. Herbicide contenant des additifs usuels et, comme principe actif, un dérivé de cyclohexane-1,3-dione de formule I selon la revendication 1.

6. Procédé de lutte contre la croissance de plantes indésirables, caractérisé par le fait que l'on traite les plantes indésirables ou les surfaces à maintenir exemptes de croissance de plantes indésirables, avec une quantité efficace du point de vue herbicide d'un dérivé de cyclohexane-1,3-dione de formule I selon la revendication 1.